(19)

Europäisches
Patentamt
European
Patent Office
Office européen
des brevets

(11) **EP 1 564 710 B1**

(12) **EUROPEAN PATENT SPECIFICATION**

(45) Date of publication and mention
of the grant of the patent:
**28.05.2008 Bulletin 2008/22**

(51) Int Cl.:
***G09G 3/34*** *(2006.01)*     ***G09G 3/20*** *(2006.01)*

(21) Application number: **05250804.1**

(22) Date of filing: **11.02.2005**

(54) **Voltage driven array**

Spannungsgesteuerte Matrix

Matrice commandée par tension

(84) Designated Contracting States:
**DE FR GB NL**

(30) Priority: **12.02.2004 US 777321**

(43) Date of publication of application:
**17.08.2005 Bulletin 2005/33**

(73) Proprietor: **Hewlett-Packard Development Company, L.P.
Houston, TX 77070 (US)**

(72) Inventors:
• **Szepesi, Leslie Louis
SE, Salem
OR 97306 (US)**

• **Martin, Eric
Corvallis
OR 97330 (US)**
• **Ghozell, Adam
Corvallis
OR 97330 (US)**

(74) Representative: **Powell, Stephen David et al
Williams Powell
Staple Court
11 Staple Inn Buildings
London, WC1V 7QH (GB)**

(56) References cited:
**EP-A- 0 695 959**     **US-A1- 2002 054 424**
**US-A1- 2003 201 955**     **US-B1- 6 429 841**

**Description**

The present invention relates to a voltage driven array, and in particular to the calibration thereof. A voltage driven array is a semiconductor device comprised of a plurality of individual addressable elements forming a two-dimensional array of voltage driven elements. For example, one known application of a voltage driven array is a pixel display screen, where each pixel on the display screen is an addressable element in the voltage driven array.

Each of the elements in a voltage driven array generates an output in response to an input driving voltage source. For example, in the case of a pixel display screen, a desired pixel (having a particular row/column address in the array) can be caused to allow light waves of a particular frequency to escape (thereby producing a particular visible color) by applying a particular magnitude of driving voltage to the corresponding element of the array.

Document US 2002/0054424 discloses a passive-matrix display device based on bi-stable interferometric light modulators. The gap selecting the wavelength of the passed light is adjustable by applying a suitable control voltage.

The output of a given element in a voltage driven array is dependent upon, among other things, the driving voltage level applied to the element, as well as the mechanical and optical properties of the element. These mechanical and optical properties in turn depend on the thickness (and material properties) of the thin films from which they are constructed. However, conventional semiconductor fabrication processes used to fabricate voltage driven arrays can result in a variation in the thickness and the material properties of the thin films across the device. As a result, applying a particular driving voltage to an element positioned at one location on a voltage driven array may generate an output that is different from the output of an element positioned at another location on the array in response to the same driving voltage level. For example, if a given driving voltage level is applied to one element on a pixel display device, the resulting gray-scale or color output may be different from the output of a different element on the same array, if the thickness of the array varies from the first element to the second element.

The present invention was developed in light of these considerations.

The present invention will now be described, by way of example, with reference to the accompanying drawings, in which:

FIG. 1 is a schematic view of a voltage driven array according to an embodiment;

FIG. 2 is a schematic view of an illumination element for a voltage driven array according to an embodiment;

Figure 2A is a schematic view of an embodiment of a switch circuit according to an aspect of the present embodiments;

Figure 2B is a schematic view of an embodiment of an array according to an aspect of the present embodiments;

FIG. 3 is a schematic view of a voltage driven array according to an embodiment;

FIG. 4 is a schematic view of a voltage driven array according to an embodiment; and

FIG. 5 is a graphical view of exemplary voltages generated by a voltage driven array according to an embodiment.

The embodiments described herein are directed to methods and systems for compensating for varying thicknesses of semiconductor voltage driven array devices when applying driving voltages to the individual array elements. Generally, different voltage levels are applied to the different array elements by a voltage supply source. The voltage supply source includes a resistive element and one or more voltage sources that apply a voltage differential across the resistive element, thereby generating different voltage levels at different physical locations along the resistive element. The array elements are connected to the resistive element at varying physical locations along the resistive element to generate different driving voltages, which are applied to the corresponding array elements.

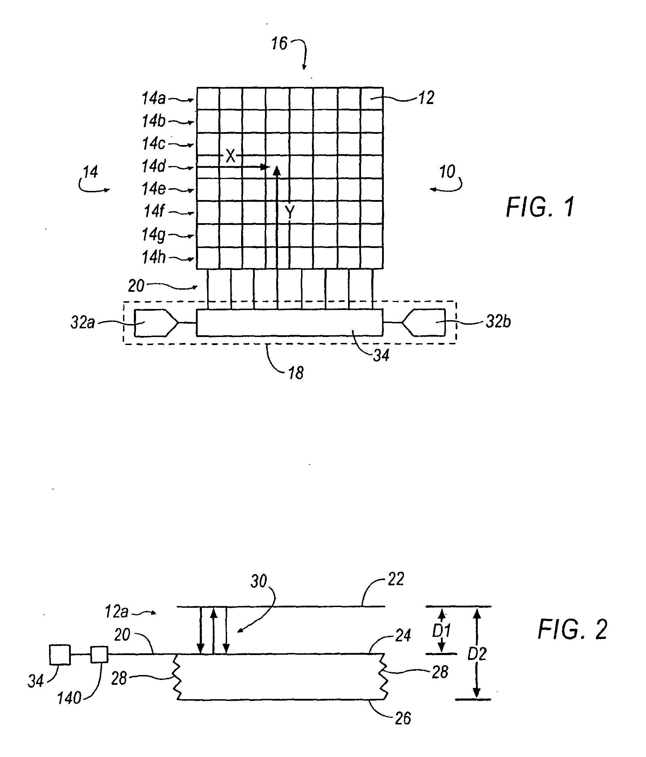

Referring now to Figure 1, a voltage driven array 10 is shown having a plurality of discrete elements 12 divided into rows 14 (14a-14h) and columns 16. A voltage supply source 18 is connected to the voltage driven array 10 by a plurality of taps 20. Each of the taps 20 connects to a respective column 16 such that, in conjunction with a time delay multiplexed process, each of the discrete elements is driven by the voltage supply source 18 in an addressable fashion (as will be discussed in greater detail). The taps 20 connect to each discrete element by conductive silicon connections, copper wires or any other known means of connecting a voltage driving source to respective discrete elements, as will be readily understood by one skilled in the art. The taps 20 can be metal conductors connecting to some transistor circuitry in each of the discrete elements 12 in column 16. Such metal may be aluminum, or a stack of aluminum with layers of refractory metal such as titanium. Taps 20 may also be doped polysilicon. One skilled in the art will recognize other materials for use as taps 20.

The voltage supply source 18 comprises DAC (Digital Analog Converter) 32a and DAC 32b connected to opposite ends of a resistive element 34. DAC 32a and DAC 32b together apply a voltage differential across resistive element 34. In an embodiment of the invention, resistive element 34 is a single element of polycrystalline silicon. The taps 20 are connected to resistive element 34 at different locations along the resistive element 34. As a result, the resistive element acts as a "voltage divider" in that the voltage level present at each tap 20 is a function of the physical position of the taps 20 on the resistive element 34. The resistance of the resistive element 34 may be chosen to provide a substantially higher current in the resistive element 34 with respect to the taps 20, to approximate a situation where no current flows in the taps, as will be readily understood by one skilled in the art.

Each of the discrete elements 12 can be any voltage driven element. In one embodiment, each of the discrete elements is an interferometer. One skilled in the art, however, will readily understand that discrete elements 12 may be any voltage driven elements arranged in an array.

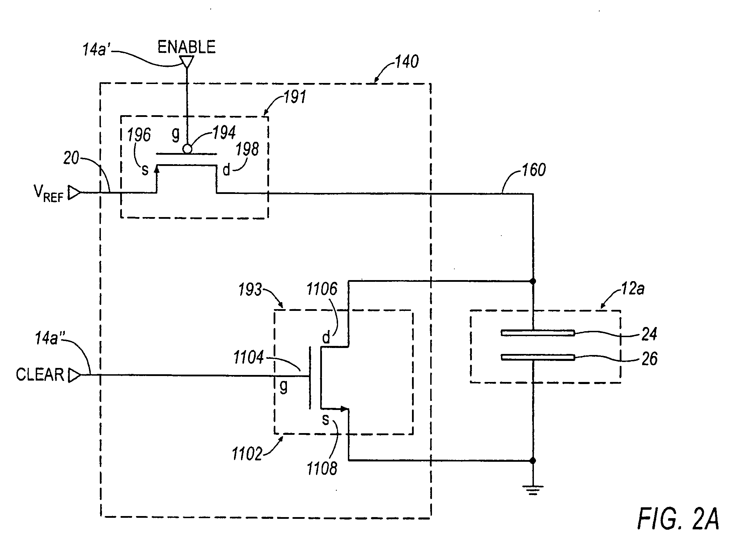

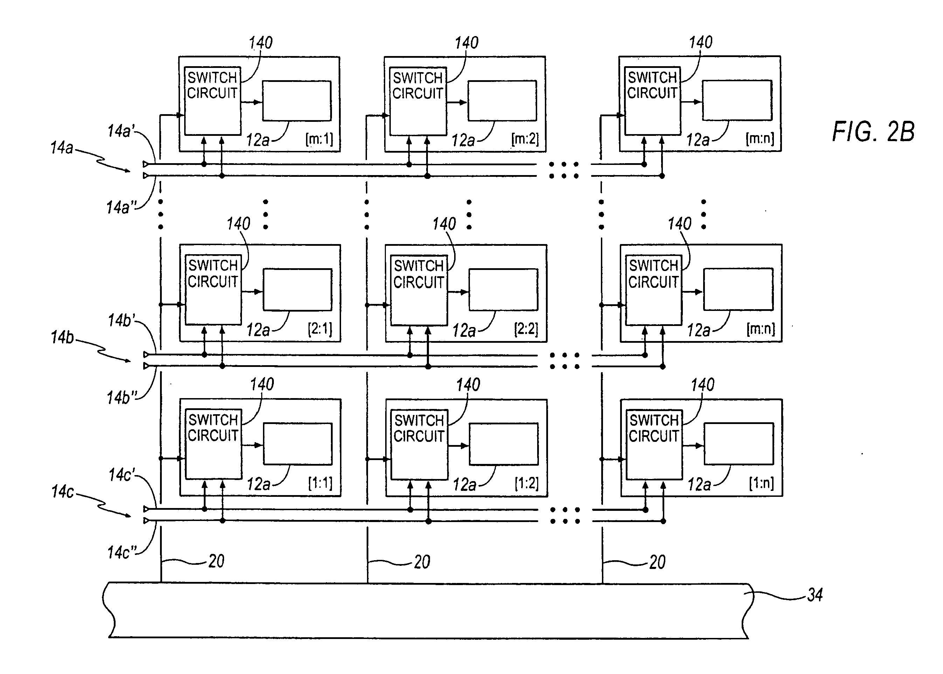

Figure 2 illustrates a cross-sectional view of an exemplary illumination element 12a that may comprise the discrete elements 12 in Figure 1. Element 12a may be a MEM (Micro Electrical Mechanical) device used to allow certain light waves having a desired frequency to exit from the MEM to thereby generate an illuminated response at a desired color. The illumination element 12a includes a semitransparent outer plate 22, reflective middle plate 24 and a lower plate 26. Springs 28 are disposed between reflective middle plate 24 and lower plate 26. The reflective middle plate 24 of each element 12a is connected to a corresponding tap 20, which in turn, is connected to the resistive element 34. A switch circuit 140 is positioned at some juncture along each tap 20 as will be discussed further below. The lower plate 26 is connected to another electrical potential that is different from that supplied by the taps 20, which in an embodiment of the invention is ground potential. In other embodiments, the polarity of the taps 20 and lower plate 26 may be reversed from that shown herein.

In Figure 2, outer plate 22 is shown separated from middle plate 24 by distance D1, and outer plate 22 is shown separated from lower plate 26 by distance D2. Distance D2 represents the thickness of a given element in the voltage driven array. Thus, as a result of the semiconductor fabrication process referred to hereinabove, distance D2 may vary from element to element across the voltage driven array 10 (Figure 1).

Functionally, white light passes through outer plate 22 and is reflected by middle plate 24. The light waves 30 reflected from middle plate 24 through outer plate 22 comprise the output of each of the elements of the voltage driven array 10. The light waves 30 reflected from middle plate 24 and output through outer plate 22 consists of light having a single frequency (a natural frequency) that is dependent upon the distance D1 between the outer plate 22 and the middle plate 24. Reflected light waves having frequencies other than the natural frequency associated with distance D1 are eliminated by destructive interference that occurs between middle plate 24 and outer plate 22 before they are output through the outer plate 22. This destructive interference is accomplished by bouncing light between the reflective middle plate 24 and semi-reflective properties of outer plate 22. As a result, the output of each element 12a is correlated to the distance D1 between the outer plate 22 and the middle plate 24.

The distance D1 between the outer plate 22 and the middle plate 24 may be intentionally adjusted by an electronic controller (not shown) to allow light waves of different frequencies to emerge from the array element 12 by applying different driving voltages to the associated tap 20. In this way, the controller can cause each of the illumination elements 12a to allow a desired wavelength of light (i.e., a desired color) to exit from the illumination elements 12a. When the reflective middle plate 24 is energized by an input driving voltage from voltage supply source 18, electrical charge accumulates on the middle plate 24 and the lower plate 26, creating a capacitive element. The difference in electrical charges between reflective middle plate 24 and lower plate 26 causes reflective middle plate 24 to compress springs 28 and to be drawn towards lower plate 26. The greater $V_{REF}$ applied to tap 20, the greater the amount of charge that accumulates on middle plate 24, and as a result, the greater the distance between reflective middle plate 24 and outer semitransparent plate 22 due to the increased electrostatic attraction (or force) between reflective middle plate 24 and lower plate 26.

In Figure 2A, switch circuit 140 is described in greater detail. The switch circuit 140 includes a first switch 191 and a second switch 193. For each of the rows 14, paths 14a', 14b'...(hereinafter referred to as 14') provides an ENABLE signal. Likewise, for each of the rows 14, paths 14a", 14b"...(hereinafter referred to as 14") provides a CLEAR signal. In some embodiments, the ENABLE signal and CLEAR signal are provided by an electronic controller (not shown). The first switch 191 receives a selected reference voltage ($V_{REF}$) at source 196 via the taps 20 (See Figure 1 and 2) and the ENABLE signal at gate 194 via path 14'. Drain 198 is coupled to reflective middle plate 24 of illumination element 12a via path 160. Second switch 193 is coupled across illumination element 12a with drain 1106 coupled to reflective middle plate 24 and source 1108 coupled to lower plate 26 via ground. Second switch 193 receives the CLEAR signal at gate 1104 via path 14".

Switch circuit 140 operates as described below to cause a charge differential between reflective middle plate 24 and lower plate 26. Initially, the ENABLE signal is at a "high" level, the CLEAR signal is at a "low" level, and the reference voltage is at a selected voltage level. As a result, first switch 191 and second switch 193 are both off. The CLEAR signal is then changed from a "low" level to a "high" level, causing second switch 193 to turn on and pull reflective middle plate 24 to ground, thereby removing any charge differential between middle plate 24 and lower plate 26. The CLEAR signal is then returned to the "low" level causing second switch 193 to again turn off.

The ENABLE signal is then changed from the "high" level to a "low" level, causing first switch 191 to turn on to thereby apply the reference voltage to reflective middle plate 24 and cause a desired charge to accumulate on reflective middle plate 24 and lower plate 26, and thereby set a gap distance between reflective middle plate 24 and lower plate 26. The ENABLE signal stays "low" for a predetermined duration before returning to the "high" level causing first switch 191 to again turn off, decoupling the reference voltage from illumination element 12a. At this point, the illumination element 12a is isolated from $V_{REF}$, and charge can no longer flow. The predetermined duration is shorter than a mechanical time constant of illumination element 12a, resulting in the reflective middle plate 24 and lower plate 26 appearing to be substantially "fixed" during the predetermined duration so that the stored charge can be calculated without having to compensate for a changing distance between the reflective middle plate 24 and a lower plate 26.

Figure 2b is a block diagram illustrating an exemplary embodiment of the switch circuit 140 in conjunction with the present embodiments. Each illumination element 12a includes a switch circuit 140.

Each switch circuit 140 is configured to control the magnitude of a stored charge differential between middle plate 24 and lower plate 26 of its associated illumination element 12a to thereby control the associated distance between reflective middle plate 24 and lower plate 26. as discussed above, the distance between reflective middle plate 24 and lower plate 26 directly affects the color output from the illumination element 12a. Each row 14 of the array 10 (See Figure 1) receives a separate CLEAR signal from path 14" and ENABLE signal from path 14' with all switch circuits 140 of a given row receiving the same CLEAR and ENABLE signals. Each column of the array 10 receives a separate reference voltage ($V_{REF}$) from the taps 20.

To store, or "write", a desired charge to each reflective middle plate 24, a reference voltage having a selected value is provided to each of the columns 16 via taps 20. As described herein below, the reference voltage provided to each element 12 may be different. The CLEAR signal for the given row is then "pulsed" for a fixed duration to cause each of the switch circuits 140 of the given row to remove, or CLEAR, any potential stored charge from its associated illumination element 12a. The ENABLE signal from path 14' for the given row 14 is then "pulsed" to cause each switch circuit 140 of the given row to apply its associated reference voltage to its associated reflective middle plate 24. As a result, a stored charge having a desired magnitude based on the value of the applied reference voltage is stored on the reflective middle plate 24 to thereby set the gap distance between reflective middle plate 24, and lower plate 26, based on the desired magnitude of the stored charge. This procedure is repeated for each row of the array 10 to "write" a desired charge to each illumination element 12a of the array 10.

With reference to Figure 2, the distance D1 is a function of the distance D2 between outer semitransparent plate 22 and lower plate 26, i.e., the width of the semiconductor device. A larger distance D2 will result in a larger distance D1 for the same applied voltage. Therefore, if the width D2 of the semiconductor device is smaller for a first illumination element 12a relative to a second illumination element 12a, then the corresponding distance D1 and the natural frequency of light corresponding to distance D1 is also smaller in the first illumination element 12a relative to the second illumination element 12a. Accordingly, the first and second illumination elements 12a would output light waves having different frequencies, even though the same driving voltage (shown as $V_{REF}$ in Figure 2A) was applied.

Therefore, different driving voltages are required to generate the same desired output from different illumination elements 12a over the same voltage driven array. Specifically, to generate a particular output from a relatively thin element of array 10, i.e., a relatively small distance D2, distance D1 should be increased more than normal in response to a driving voltage. Thus, a relatively greater driving voltage should be applied to reflective middle plate 24 to draw reflective middle plate 24 closer to lower plate 26. This movement results in an increased distance D1 for that particular illumination element 12a with respect to the other illumination elements 12a. Conversely, to generate the same output from a relatively thick element of array 10, i.e., a relatively large distance D2, distance D1 should be increased less than normal in response to a driving voltage. Thus, a relatively smaller driving voltage should be applied to reflective middle plate 24 to draw reflective middle plate toward lower plate 26 to a lesser degree. As a result, distance D1 would be smaller than it would otherwise have been if the relatively smaller driving voltage was not applied.

The inventors have recognized that the variation in the semiconductor thickness D2 may tend, in some situations, to vary linearly across the device. When the thickness variation is approximately linear, a linearly-changing voltage source may be applied across the fabricated semiconductor wafer, by virtue of the resistive element 34, to compensate for a linearly changing thickness D2 of the array. A method for determining the appropriate driving voltage for each element 12 and an apparatus for generating those driving voltages is hereinafter described.

Assume that the voltage driven array of Figure 1 has a thickness D2 that decreases in an approximately linear fashion from the lower left hand corner to the upper right hand corner of array 10 (Figure 1). To generate the same output from each of the illumination elements 12a (assuming illumination elements 12a replace discrete elements 12 in Figure 1), a relatively lower voltage would need to be applied to the elements in the lower left hand corner of the array, and a relatively higher voltage would need to be applied to the elements in the upper right hand corner of the array. The various driving voltages required to generate the same output from each of the elements, then, can be determined based upon the position of the element in the array and certain empirically-determined driving voltages. For instance, assume that the middle element in the array is to be driven at a nominal voltage level of V0 to generate a particular output. Then, for a given semiconductor array, the desired driving voltage for the lower left hand corner element can be expressed as V0 - ΔV2, and the desired driving voltage for the upper right hand corner element can be expressed as V0 + ΔV1, where ΔV1 and ΔV2 are empirically pre-determined for a given semiconductor wafer or fabrication process. Then, the required driving voltage (the "applied voltage") for any element in the array can be determined in terms of V0, ΔV1, and ΔV2 based upon the X, Y position (row and column coordinates) of the element in the array, as shown below in Equation (1).

$$\text{Driving Voltage} = V_0 + X \cdot Y \cdot \Delta V1 + (1 - X)(1 - Y)(-\Delta V2) \qquad (1)$$

With $\Delta V1$ and $\Delta V2$ being empirically determined constants, the appropriate driving voltage to generate any desired output for any element in the array can be derived from Equation (1) by substituting the nominal driving voltage $V_0$ associated with the desired output and the X, Y coordinates of the element to be activated.

Voltage source 18, in combination with a time delay multiplex method, can be used to generate the desired driving voltages in each of the illumination elements 12a, as calculated from Equation (1). As evident from Equation (1), each element in a voltage driven array having a varying thickness may require a different driving voltage to generate the same output. Thus, the voltage driven array 10 (Figure 1) may require voltage variation across the array 10 both horizontally (across columns from left to right in Figure 1) and vertically (across rows from bottom to top in Figure 1). Horizontal voltage variation (moving from left to right across columns) in Figure 1 is accomplished by the voltage dividing characteristics of the resistive element 34. That is, the voltage differential between the output voltages of DAC 32a and DAC 32b is linearly divided by resistive element 34. In the situation where the thickness of the voltage driven array 16 decreases from left to right in Figure 1, the output voltage of DAC 32a would be greater than the output voltage of DAC 32b. In this way, the driving voltages applied to the taps 20 would decrease linearly from left to right along resistive element 34 in Figure 1.

Adjustment of the output voltages of DAC 32a and DAC 32b in combination with a time delay multiplexing method can be used to adjust the driving voltage vertically in the array. The time delay multiplexing, which includes activating and deactivating respective rows to allow voltages supplied to the columns to only drive the selected rows, may be accomplished by any means known to one skilled in the art. By way of example, at time = T1, a digital signal representative of voltage V11 may be supplied to DAC 32a, which converts the signal into an analog output voltage. A relatively lower voltage V2 is supplied by DAC 32b in response to a corresponding digital signal. The voltage difference between DAC 32a and DAC 32b represents the voltage differential needed to drive the discrete elements from the left hand side of row 14a to the right hand side of row 14a. The taps 20 supply a stepwise decreasing driving voltage, based on the well-known voltage divider rule applied to the resistance of the resistive element 34, from the left hand column of row 14a to the right hand column of row 14a. The row 14a is activated while the remaining rows 14 remain deactivated, such that only row 14a is driven. Next, at time T=2, row 14b is activated while the remaining rows 14 are deactivated such that row 14b is driven by the voltage supply source 18. Here, a new voltage V12 is supplied from DAC 32a and a new voltage V22 is supplied from DAC 32b. New voltages V12 and V22 are different from previous voltages V11 and V21 so as to generate the desired driving voltages from row 14b. For example, if the thickness of array 10 increases from row 14a to row 14h, then new voltages V12 and V22 will be less than previous voltages V11 and V21. The resistive element 34, again, provides the needed stepwise change in voltage horizontally from the left hand side to the right hand side of the row 14b. This process is then repeated for each row of the array.

It will be readily understood that, as opposed to the configuration described above, the resistive element 34 may be positioned along the rows 14, while time delay multiplexing is applied to the columns. Alternatively, resistive elements 34 may be positioned along both rows and columns to stepwise adjust each of the illumination elements 12a. It should also be understood that, although the present invention has been described with respect to illumination elements 12a, the present invention may be applied to any discrete voltage driven elements such as discrete elements 12 positioned in an array that require a voltage adjustment. Additionally, although the above-described embodiment assumes linear changing thickness D2 across the array 10, the resistance of the resistive element 34 may also be chosen to provide a non-linear voltage solution across the array 10.

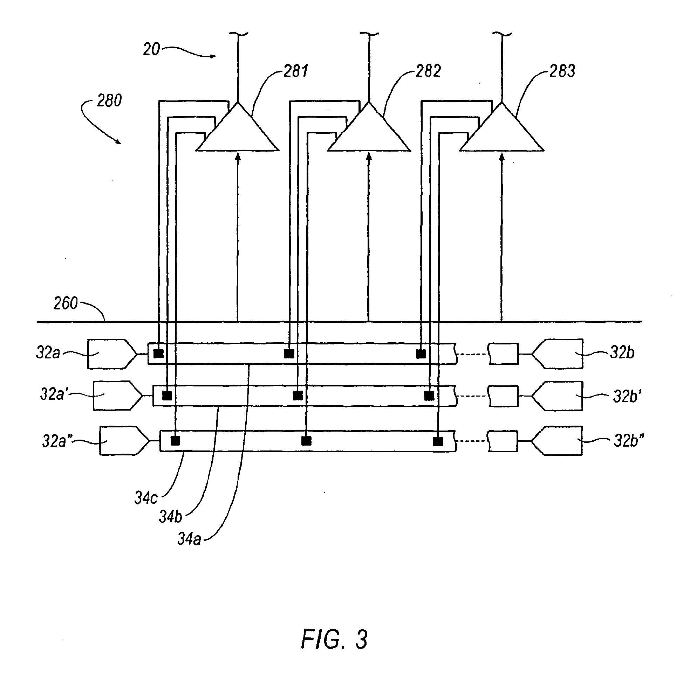

Referring now to Figure 3, another embodiment of the present invention is shown and described. In Figure 3, a plurality of taps 20 are connected to associated array elements 12 as described above in connection with figures 1-2B. In this second embodiment, the voltage supply source includes resistive elements 34a, 34b and 34c connected to the plurality of taps 20 through analog multiplexers (MUXs) 280. MUXs 280 include MUXs 281, 282, 283, etc.

Each of the taps 20 are connected to each resistive element 34a, 34b, and 34c through multiplexers (MUX's) 280. Each of the resistive elements 34a, 34b and 34c operates as described in the previous sections, and descriptions for like elements are omitted. DACs 32a and 32b, 32a' and 32b', and 32a" and 32b" generate voltage differentials across resistive elements 34a, 34b, and 34c, respectively. The voltage differentials across resistive elements 34a, 34b, and 34c may be different from each other. Each of the voltage differentials and associated resistive element are determined so that, for a given illumination element 12a and (Figure 1), a different driving voltage is applied to the illumination element through each of the three different resistive elements 34a, 34b, and 34c. The three different driving voltages may be determined so as to cause three different colors to be generated by the associated illumination element when applied.

When the above-described embodiment is implemented, the voltage differentials generated by the pairs of DACs 32a and 32b, 32a' and 32b' and 32a" and 32b" are applied to the illumination elements 12a by use of MUXs 280.

MUXs 280 select an analog reference voltage for each column, in accordance with column data 260. For example, analog MUX 281 selects an analog voltage from among resistive elements 34a, 34b, and 34c to apply to the taps 20. Similarly, analog MUX 282 selects an analog voltage from the same set of resistive elements 34a, 34b, and 34c to apply to the respective tap 20, and analog MUX 283 selects an analog voltage from the same set of resistive elements 34a, 34b, and 34c to apply to its respective tap 20. As described in previous embodiments, paths 14' and 14" (Figure 2A) act as ENABLE and CLEAR signals for driving the selected column voltage from resistive elements 34a, 34b, and 34c for the selected illumination element 12a.

Additional colors beyond the three predetermined colors can be generated by mixing the three predetermined colors by time multiplexing outputs from each of the resistive elements 34a, 34b and 34c to the respective illumination elements. For example, if a color halfway between red and green is desired, an illumination element 12 can be driven red for one frame (complete cycle of driving the array) and green for the next frame. This ratio can be varied in integral steps to obtain the desired color mix. The color resolution depends on the refresh rate of the system compared to the eye's temporal response. One skilled in the art will readily understand that variations from the colors recited above may be generated instead of red, green, or blue by time multiplexing.

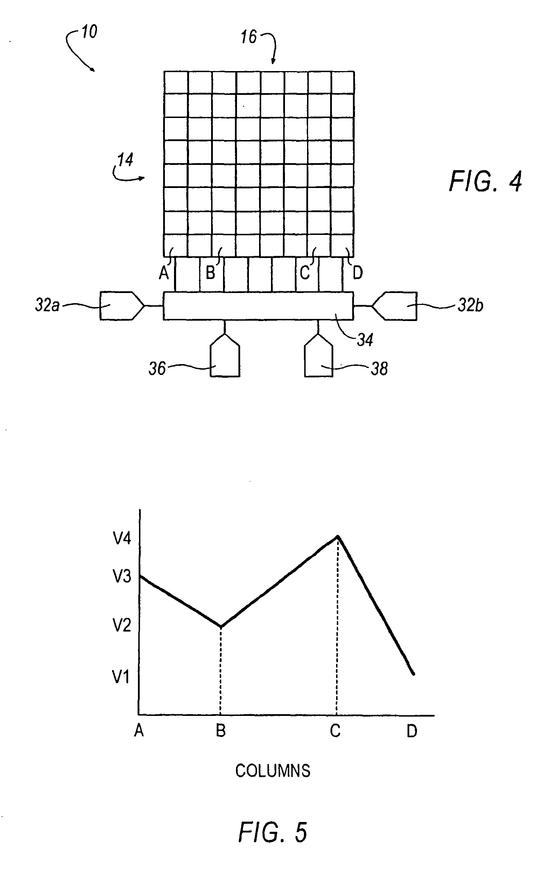

Referring now to Figures 4 and 5, another embodiment of the present invention is shown and described, wherein like components from previous embodiments have like reference numerals. In Figure 4, the voltage driven array 10 is assumed to change in thickness in a stepwise fashion from points A to B, B to C, and C to D. This type of semiconductor thickness variation contrasts with the approximately linear variation described in connection with Figure 1. In Figure 4, the thickness D2 gets progressively larger from points A to B. The thickness D2 then gets progressively thinner from point B to point C, and then again gets progressively thicker from point C to point D. Additional DAC's 36 and 38 are connected proximate points B and C, respectively, along the resistive element 34 for reasons which will be discussed below.

Figure 5 illustrates the voltages required to offset for the thickness variations described above along the array 10. The Y axis illustrates the required voltage for a given wavelength of light while the X axis illustrates the X position across the array. For example, to output a specific wavelength of light, column A must be supplied with a voltage V3, Column B must be supplied with a voltage V2, Column C must be supplied with a voltage V4 and Column D must be supplied with a voltage V1. One skilled in the art will readily recognize that many different variations on this example are possible, and that the present invention is not limited to that disclosed herein.

DACs 32a, 36, 38 and 32b (See Figure 4) provide these voltages at columns A, B, C and D respectively. The resistance of resistive element 34 then acts as a voltage divider, as discussed in previous embodiments, to provide a linear voltage transition between each of the columns A, B, C and D to compensate for the thickness variations. As can be seen in Figure 5, the driving voltage supplied to array 10 starts at voltage V3 and linearly drops to voltage V2 at point B. Then, the voltage linearly increases from point B to point C. The voltage at point C is then linearly dropped to the voltage required at point D. By this method, step wise or slowly changing non-uniformities that are approximately step wise (even those that are nonlinear), can be compensated for. Thus, although Figures 4 and 5 show a linear step wise variation between each of the respective points A, B, C, and D, the actual variation may be a non-linear curve that is approximated by a step wise model similar to that shown.

While the present invention has been particularly shown and described with reference to the foregoing preferred and alternative embodiments, it should be understood by those skilled in the art that various alternatives to the embodiments of the invention described herein may be employed in practicing the invention without departing from the scope of the invention as defined in the following claims. It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Where the claims recite "a" or "a first" element of the equivalent thereof, such claims should be understood to include incorporation of one or more such elements, neither requiring nor excluding two or more such elements.

## Claims

1. A voltage driven array (10), comprising:

> an array of discrete illumination elements (12) organized into at least one row (14) and a plurality of columns (16) and each comprising an outer semitransparent plate (22);
> a reflective middle plate (24) positioned substantially parallel to and spaced from the semitransparent plate (22);
> a lower plate (26) connected to a first potential by one of a row and a column; and

at least one spring positioned between the at least one reflective middle plate (24) and the lower plate (26);
wherein said middle plate (24) is connected to a second potential by the other one of said one of a row and a column to generate an electrostatic force between the reflective middle plate (24) and the lower plate (26) to move the reflective middle plate (24) to a position defining a desired distance between the reflective middle plate (24) and the outer semitransparent plate (22);
the array further comprising a voltage supply comprising:

a resistive element (34) having a first end and a second end;
a first voltage applied to the first end and a second voltage applied to the second end that is different from the first voltage; and
wherein each one of a plurality of positions on the resistive element (34) connects to a respective one of the rows or columns (16) such that each of the different positions along the resistive element 934) supplies a different voltage to the respective row or column than a remainder of the positions.

2. The voltage driven array (120) according to Claim 1, wherein a resistive element (34) is constructed of polysilicon.

3. The voltage driven array (10) according to Claim 1, further comprising a third voltage applied to the resistive element (34) at a position between the first and the second end.

4. The voltage driven array (10) according to Claim 1, wherein each of the columns (16) connects to the resistive element (34).

5. The voltage driven array (10) according to Claim 4, wherein the voltage supply is adapted to supply the array with voltages in a time delay multiplexed fashion.

6. The voltage driven array (10) according to Claim 1, further comprising:

a second voltage supply and a third voltage supply; and
wherein each of the voltage supply, the second voltage supply and the third voltage supply provides the rows (14) or columns (16) with different voltages than a remainder of the voltage supply, the second voltage supply and the third voltage supply.

7. The voltage driven array (10) according to Claim 6, wherein:

the voltage supply supplies each of the columns (16) or rows (14) with voltages sufficient to generate a first color in the illumination elements;
the second voltage supply supplies each of the columns (16) or rows (14) with voltages sufficient to generate a second color in the illumination elements; and
the third voltage supply supplies each of the columns (16) or rows (14) with voltages sufficient to generate a third color in the illumination elements.

8. The voltage driven array (10) according to Claim 7, wherein the first color is red, the second color is green and the third color is blue.

**Patentansprüche**

1. Ein spannungsgetriebenes Array (10), das folgende Merkmale aufweist:

ein Array von diskreten Beleuchtungselementen (12), die in zumindest eine Zeile (14) und eine Mehrzahl von Spalten (16) organisiert sind und jeweils eine äußere halbtransparente Platte (22) aufweisen;
eine reflektierende mittlere Platte (24), die im Wesentlichen parallel zu und beabstandet von der halbtransparenten Platte (22) positioniert ist;
eine untere Platte (26), die durch entweder eine Zeile oder eine Spalte mit einem ersten Potential verbunden ist; und
zumindest eine Feder, die zwischen der zumindest einen reflektierenden mittleren Platte (24) und der unteren Platte (26) positioniert ist;
wobei die mittlere Platte (24) durch die andere von entweder einer Zeile oder einer Spalte mit einem zweiten Potential verbunden ist, um eine elektrostatische Kraft zwischen der reflektierenden mittleren Platte (24) und der unteren Platte (26) zu erzeugen, um die reflektierende mittlere Platte (24) zu einer Position zu bewegen, die einen erwünschten Abstand zwischen der reflektierenden mittleren Platte (24) und der äußeren halbtransparenten Platte (22) definiert;

wobei das Array ferner eine Spannungsversorgung aufweist, die folgende Merkmale aufweist:

ein Widerstandselement (34), das ein erstes Ende und ein zweites Ende aufweist;
eine erste Spannung, die an das erste Ende angelegt ist, und eine zweite Spannung, die an das zweite Ende angelegt ist und die sich von der ersten Spannung unterscheidet; und
wobei jede von einer Mehrzahl von Positionen an dem Widerstandselement (34) eine Verbindung zu einer jeweiligen der Zeilen oder Spalten (16) herstellt, derart, dass jede der unterschiedlichen Positionen entlang des Widerstandselements (34) eine unterschiedliche Spannung zu der jeweiligen Zeile oder Spalte liefert als ein Rest der Positionen.

2. Das spannungsgetriebene Array (120) gemäß Anspruch 1, bei dem ein Widerstandselement (34) aus Polysilizium aufgebaut ist.

3. Das spannungsgetriebene Array (10) gemäß Anspruch 1, das ferner eine dritte Spannung aufweist, die an das Widerstandselement (34) an einer Position zwischen dem ersten und dem zweiten Ende angelegt ist.

4. Das spannungsgetriebene Array (10) gemäß Anspruch 1, bei dem jede der Spalten (16) eine Verbindung mit dem Widerstandselement (34) herstellt.

5. Das spannungsgetriebene Array (10) gemäß Anspruch 4, bei dem die Spannungsversorgung angepasst ist, um das Array in einer zeitverzögerungsgemultiplexten Weise mit Spannungen zu versorgen.

6. Das spannungsgetriebene Array (10) gemäß Anspruch 1, das ferner folgende Merkmale aufweist:

eine zweite Spannungsversorgung und eine dritte Spannungsversorgung; und
wobei jede der Spannungsversorgung, der zweiten Spannungsversorgung und der dritten Spannungsversorgung die Zeilen (14) oder Spalten (16) mit unterschiedlichen Spannungen versieht als ein Rest der Spannungsversorgung, der zweiten Spannungsversorgung und der dritten Spannungsversorgung.

7. Das spannungsgetriebene Array (10) gemäß Anspruch 6, bei dem:

die Spannungsversorgung jede der Spalten (16) oder Zeilen (14) mit Spannungen versorgt, die ausreichend sind, um eine erste Farbe in den Beleuchtungselementen zu erzeugen;
die zweite Spannungsversorgung jede der Spalten (16) oder Zeilen (14) mit Spannungen versorgt, die ausreichend sind, um eine zweite Farbe in den Beleuchtungselementen zu erzeugen; und
die dritte Spannungsversorgung jede der Spalten (16) oder Zeilen (14) mit Spannungen versorgt, die ausreichend sind, um eine dritte Farbe in den Beleuchtungselementen zu erzeugen.

8. Das spannungsgetriebene Array (10) gemäß Anspruch 7, bei dem die erste Farbe rot ist, die zweite Farbe grün ist und die dritte Farbe blau ist.

**Revendications**

1. Matrice commandée par tension (10), comprenant :

♦ un ensemble d'éléments d'illumination discrets (12) organisés en au moins une rangée (14) et une pluralité de colonnes (16) et comprenant chacun une plaque semi transparente extérieure (22) ;
♦ une plaque intermédiaire réfléchissante (24) positionnée sensiblement parallèle à et espacée par rapport. à la plaque semi transparente (22) ;
♦ une plaque inférieure (26) connectée à un premier potentiel par l'une d'une rangée et d'une colonne ; et
♦ au moins un ressort positionné entre la au moins une plaque intermédiaire réfléchissante (24) et la plaque inférieure (26) ;

dans laquelle ladite plaque intermédiaire réfléchissante (24) est connectée à un deuxième potentiel par l'autre de ladite une rangée et une colonne dans le but de générer une force électrostatique entre la plaque intermédiaire réfléchissante (24) et la plaque inférieure (26) de façon à déplacer la plaque intermédiaire réfléchissante (24) sur une position qui définit une distance souhaitée entre la plaque intermédiaire réfléchissante (24) et la plaque semi transparente extérieure (22) ; la matrice comprenant par ailleurs un bloc de fourniture de tension comprenant :

♦ un élément résistif (34) comprenant une première extrémité et une deuxième extrémité ;
♦ une première tension appliquée sur la première extrémité, et une deuxième tension appliquée sur la deuxième extrémité qui est différente de la première tension ; et

dans laquelle chacune d'une pluralité de positions sur l'élément résistif (34) établit une connexion avec l'une respective des rangées (14) ou des colonnes (16) si bien que chacune des différentes positions le long de l'élément résistif (34) fournit à la rangée ou à la colonne respective une tension différente de celle qui est fournie aux autres positions restantes.

2. Matrice commandée par tension (120) selon la revendication 1, dans laquelle un élément résistif (34) est réalisé en polysilicium.

3. Matrice commandée par tension (10) selon la revendication 1, comprenant par ailleurs une troisième tension qui est appliquée sur l'élément résistif (34) au niveau d'une position entre la première extrémité et la deuxième extrémité.

4. Matrice commandée par tension (10) selon la revendication 1, dans laquelle chacune des colonnes (16) établit une connexion avec l'élément résistif (34).

5. Matrice commandée par tension (10) selon la revendication 4, dans laquelle le bloc de fourniture de tension est adapté pour fournir à la matrice des tensions selon une façon multiplexée avec retard dans le temps.

6. Matrice commandée par tension (10) selon la revendication 1, comprenant par ailleurs :

un deuxième bloc de fourniture de tension et un troisième bloc de fourniture de tension ; et
dans laquelle chacun du bloc de fourniture de tension, du deuxième bloc de fourniture de tension et du troisième bloc de fourniture de tension fournit aux rangées (14) ou aux colonnes (16) des tensions différentes d'un reste du bloc de fourniture de tension, du deuxième bloc de fourniture de tension et du troisième bloc de fourniture de tension.

7. Matrice commandée par tension (10) selon la revendication 6, dans laquelle :

♦ le bloc de fourniture de tension fournit à chacune des colonnes (16) ou des rangées (14) des tensions suffisantes pour produire une première couleur dans les éléments d'illumination ;
♦ le deuxième bloc de fourniture de tension fournit à chacune des colonnes (16) ou des rangées (14) des tensions suffisantes pour produire une deuxième couleur dans les éléments d'illumination ; et
♦ le troisième bloc de fourniture de tension fournit à chacune des colonnes (16) ou des rangées (14) des tensions suffisantes pour produire une troisième couleur dans les éléments d'illumination.

8. Matrice commandée par tension (10) selon la revendication 7, dans laquelle la première couleur est du rouge, la deuxième couleur est du vert, et la troisième couleur est du bleu.

16

14a → 12
14b →
14c →
14     14d → X        10        FIG. 1
14e →      Y
14f →
14g →
14h →

20 →

32a →        → 32b
34
18

30        22
12a →
D1    FIG. 2
20        24
34    140    28    D2
28
26

FIG. 2A

EP 1 564 710 B1

FIG. 2B

EP 1 564 710 B1

FIG. 3

*FIG. 4*

COLUMNS

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020054424 A